(19) Europäisches Patentamt

European Patent Office

Office européen des brevets

(11) **EP 0 908 340 B1**

(12) **EUROPEAN PATENT SPECIFICATION**

(45) Date of publication and mention
of the grant of the patent:
**10.12.2003 Bulletin 2003/50**

(51) Int Cl.⁷: **B60H 1/00**

(21) Application number: **98308166.2**

(22) Date of filing: **07.10.1998**

(54) **Air conditioning system for vehicles**

Kraftfahrzeugklimaanlage

Installation de climatisation pour véhicules

(84) Designated Contracting States:
**DE FR**

(30) Priority: **13.10.1997 JP 29638097**

(43) Date of publication of application:
**14.04.1999 Bulletin 1999/15**

(73) Proprietor: **Sanden Corporation
Isesaki-shi, Gunma 372-8502 (JP)**

(72) Inventor: **Inoue, Atsuo
Isesaki-shi, Gunma, 372-8502 (JP)**

(74) Representative: **Haley, Stephen
Gill Jennings & Every,
Broadgate House,
7 Eldon Street
London EC2M 7LH (GB)**

(56) References cited:
**EP-A- 0 353 764      US-A- 4 582 124
US-A- 5 634 348**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to an air conditioning system suitable for use in a vehicle, and in particular to an air conditioning system as described in the preamble of claim 1.

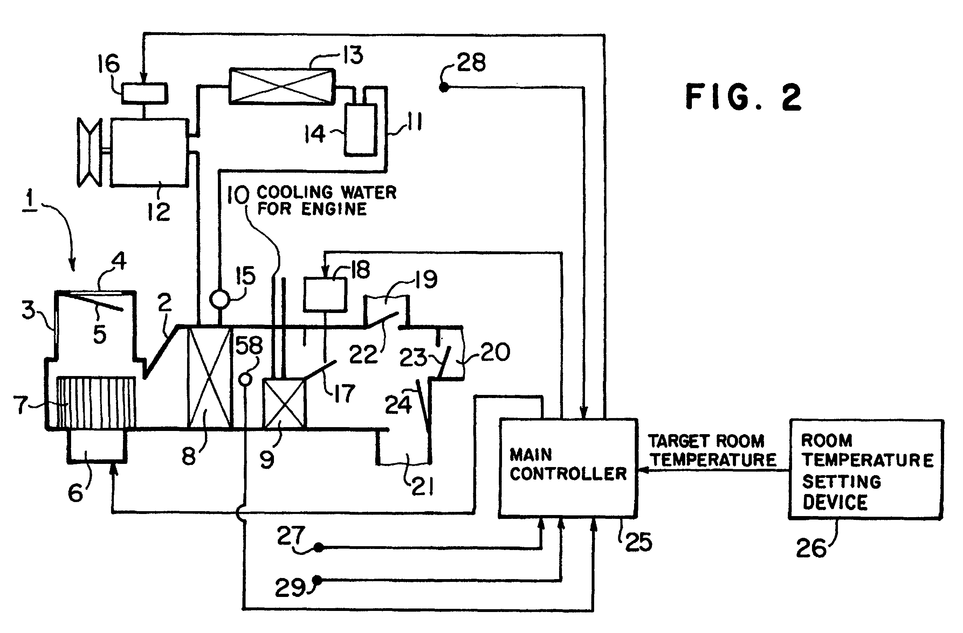

A known system for an air conditioner used in a vehicle is constituted, for example, as shown in Fig. 2 (this Fig. 2 is also used for explanation of a first embodiment of the present invention described later). Fig. 2 mainly depicts a mechanical part of an air conditioner 1 for a vehicle. Air path 2a is formed in air duct 2, and inside air introduction port 3 and outside air introduction port 4 are opened at an entrance position of air duct 2. Switching damper 5 controls a ratio of an amount of air sucked from port 3 to an amount of air sucked from port 4. Sucked air is sent into air duct 2 by blower 7 driven by motor 6.

An evaporator 8 is provided as a cooler at a position downstream of blower 7, and a hot water heater 9 is provided as a heater at a position downstream thereof. Cooling water 10 for an engine is circulated in hot water heater 9, thereby heating the heater 9.

Refrigerant circulated in a cooler cycle 11 is supplied to evaporator 8. The refrigerant is compressed, for example, by a variable displacement compressor 12, condensed by a condenser 13, sent to evaporator 8 through a reservoir tank 14 and an expansion valve 15, and sucked into compressor 12 from evaporator 8. The pressure of this suction can be appropriately controlled by a suction pressure controller 16.

Air mixing damper 17 is provided at a position immediately downstream of hot water heater 9. A ratio of an amount of air passing through heater 9 to an amount of air bypassing the heater 9 is controlled by adjusting an opening degree of air mixing damper 17 operated by an air mixing damper actuator 18.

The temperature conditioned air is sent into an interior of a vehicle through respective ports 19, 20 and 21 (for example, DEF mode port, VENT mode port and FOOT mode port). Respective dampers 22, 23 and 24 are provided for the respective ports 19, 20 and 21.

The voltage (rotational speed) applied to motor 6 for blower 7, air mixing damper actuator 18 and suction pressure controller 16 for compressor 12 are controlled based on signals sent from a main controller 25. To main controller 25, a signal of a target room temperature set by a room temperature setting device 26 and detecting signals sent from room temperature sensor 27 (inside air temperature), outside air temperature sensor 28 and sunshine sensor 29 are inputted, respectively.

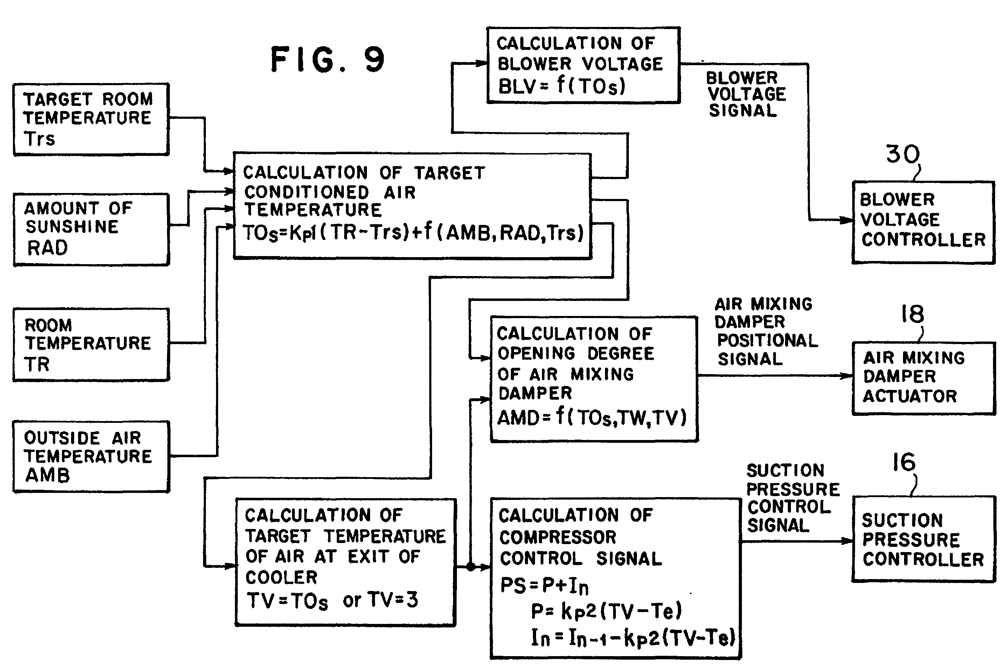

The control for air conditioner 1 is performed in main controller 25, for example, as shown in Fig. 9. Target room temperature Trs set by room temperature setting device 26, outside air temperature AMB detected by outside air temperature sensor 28, an amount of sunshine RAD detected by sunshine sensor 29 and room temperature TR detected by room temperature sensor 27 are inputted to main controller 25, respectively. Based on these input signals, a target conditioned air temperature TOs is calculated by the following equation.

$$TOs = Kp1(TR - Trs) + f(AMB, RAD, Trs)$$

Where, Kp1 is a proportional constant.

A target temperature TV of air at an exit of cooler 8 is calculated as follows, in accordance with present other conditions. (Case ①) When dehumidification or maximum cooling performance is required, the target temperature TV is set at a lower limit value which does not cause cooler 8 to freeze, for example, TV = 3. (Case ②) When power saving is required, it is set at a correlation value of a target conditioned air temperature required for controlling the room temperature, for example, TV = TOs.

The voltage BLV applied to motor 6 for blower 7 is calculated based on these calculated values by the following equation.

$$BLV = f(TOs)$$

The opening degree AMD of air mixing damper 17 is calculated by the following equation.

$$AMD = f(TOs, TW, TV)$$

Where, TW is a temperature of hot water at an entrance position of heater 9. The compressor suction pressure PS is calculated by the following compressor control signal calculating equation.

$$PS = P + I_n$$

$$P = kp2(TV - Te) \quad \cdots \text{(proportional term)}$$

$$I_n = I_{n-1} - kp2(TV - Te) \quad \cdots \text{(integral term)}$$

Where, Te is an actually measured temperature of air at an exit of cooler 8, and kp2 is a coefficient.

By such calculations, the voltage signal for blower 7 is sent to blower voltage controller 30, the air mixing damper positional signal is sent to air mixing damper actuator 18, and the compressor suction pressure signal is sent to suction pressure controller 16, thereby controlling the rotational speed of blower 7, the opening degree of air mixing damper 17 and the suction pressure of compressor 12, respectively.

In such a conventional control system, however, particularly in the calculation of a target temperature TV of air at an exit of cooler 8, if it is controlled as described in the above Case ① , dehumidification may be performed too much, and an unnecessary power may be required. Further, in the above-described control of Case ② , when outside air temperature is lower than a room temperature and, in particular, when outside air humidity is high, a window glass may be clouded with moisture evaporated from crew(s). If the window glass is clouded, visual range may deteriorate.

An air conditioning system comprising the features of the preamble of claim 1 of present application is disclosed for example by document EP 0 353 764.

It would be desirable to provide an air conditioning system for vehicles which can control the system so as to prevent an excessive dehumidification to save power and so as to perform an optimum dehumidification in accordance with present conditions to prevent a window glass from being clouded.

To achieve the foregoing and other objects, in an air conditioning system for vehicles according to the present invention, a target temperature of a cooler is calculated based on an outside air temperature and an adjusted air amount of a blower, and the cooler is controlled so that an actual temperature of the cooler may approach the target temperature.

Namely, an air conditioning system for vehicles according to the present invention has at least a blower sending air into an interior of a vehicle through an air path, a cooler provided in the air path for cooling/dehumidifying air by heat exchange with air, means for adjusting an amount of air sent by the blower and means for detecting an outside air temperature. The air conditioning system comprises (a) means for calculating a target temperature of the cooler based on an outside air temperature detected by the outside air temperature detecting means and an amount of air adjusted by the blower air amount adjusting means and (b) means for controlling a temperature of the cooler to approach the target temperature of the cooler by controlling a cooling condition of the cooler.

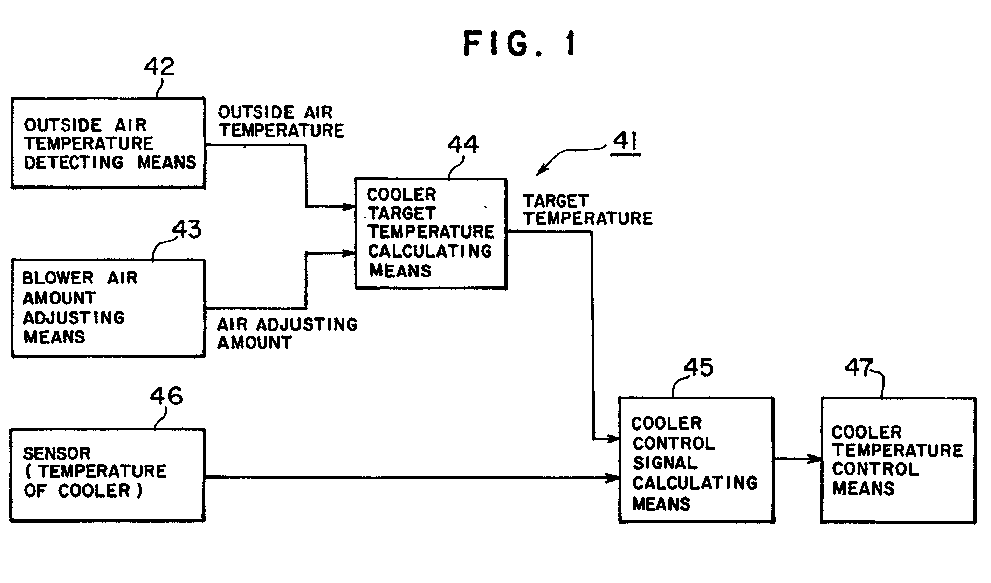

The main control of this system may be expressed, for example, as a control flow 41 shown in Fig. 1. A target temperature of a cooler is calculated by cooler target temperature calculating means 44 based on a signal of outside air temperature detecting means 42 and a signal of blower air amount adjusting means 43 (for example, a voltage for the blower). A value of a control signal for the cooler (for example, suction pressure signal of a compressor in a refrigerant circuit) is calculated by cooler control signal calculating means 45 so that an actual temperature of the cooler detected by an appropriate sensor 46 approaches the calculated target temperature. The temperature of the cooler is controlled by cooler temperature control means 47 (for example, suction pressure control means for the compressor) based on the signal from the cooler control signal calculating means 45.

In such an air conditioning system for vehicles, the target temperature of the cooler is calculated as an optimum temperature such that a present dew point temperature of air in the interior of the vehicle including moisture (vapor) evaporated from crew(s) becomes slightly lower than a temperature of a surface of a window glass, and the temperature of the cooler is controlled so as to approach the calculated target temperature. Therefore, the window glass can be surely prevented from being clouded. Further, because unnecessary dehumidification is not performed, power may be adequately saved.

Further objects, features, and advantages of the present invention will be understood from the following detailed description of the preferred embodiments of the present invention with reference to the accompanying figures.

Preferred embodiments of the invention are now described with reference to the accompanying figures, which are given by way of example only, and are not intended to limit the present invention.

Fig. 1 is a block diagram of an air conditioning system according to the present invention, showing a basic technical concept of the present invention.
Fig. 2 is a schematic diagram of an air conditioning system according to a first embodiment of the present invention.
Fig. 3 is a psychrometric chart for explaining a basic technical concept of the present invention.
Fig. 4 is a graph showing a relationship between blower air amount and temperatures Teo and TV for explaining a basic technical concept of the present invention.
Fig. 5 is a block diagram showing an example of control of the system depicted in Fig. 2.
Fig. 6 is a schematic diagram of an air conditioning system according to a second embodiment of the present invention.
Fig. 7 is a block diagram showing an example of control of the system depicted in Fig. 6.
Fig. 8 is an explanation diagram showing a control condition of a clutch by the system depicted in Fig. 6.
Fig. 9 is a block diagram showing an example of control of a conventional air conditioning system.

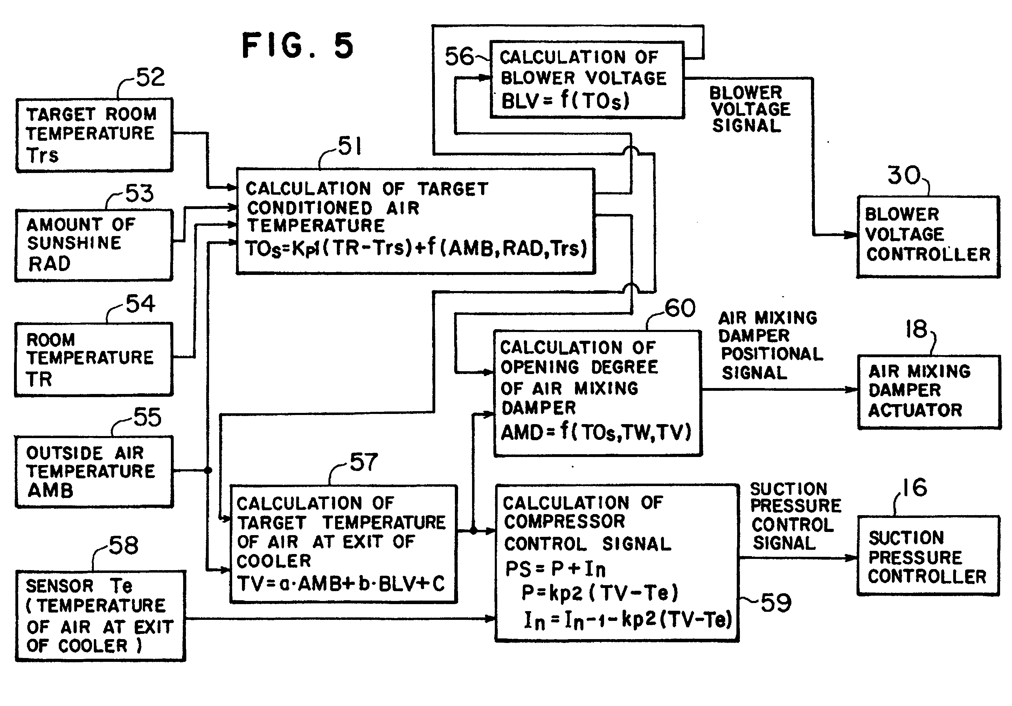

Fig. 2 shows a schematic constitution of an air conditioning system according to a first embodiment of the present invention. The mechanical part of this system is substantially the same as that of a conventional system, and because the mechanical constitution has been already explained, here, the explanation thereof is omitted. Although the control in main controller 25 is performed as shown in Fig. 5, first, a basic technical concept in the present invention, which is a base for the control, will be explained before explanation of the control.

A man evaporates moisture by sweating, etc., and according to JIS-D4502, the amount of evaporated

moisture (vapor) ($\Delta$W) is defined as a value of (75 g/h x number of crew(s)). Further, it is understood that a temperature of a room-side surface of a window glass is nearly equal to an outside air temperature at least in a usual running condition. Therefore, the relationship between an upper limit value (= x1) of an absolute humidity in a room causing no cloud of a window glass, that is, an absolute humidity when a dew point is equal to an outside air temperature, and an absolute humidity (= x2) of temperature conditioned air necessary for maintaining a state of (a room absolute humidity = x1) even when the vapor of the above-described $\Delta$W (g/h) is generated, may be expressed as follows , from an amount of air sent by a blower (G kg/h) and an amount of generated vapor ($\Delta$W g/h)

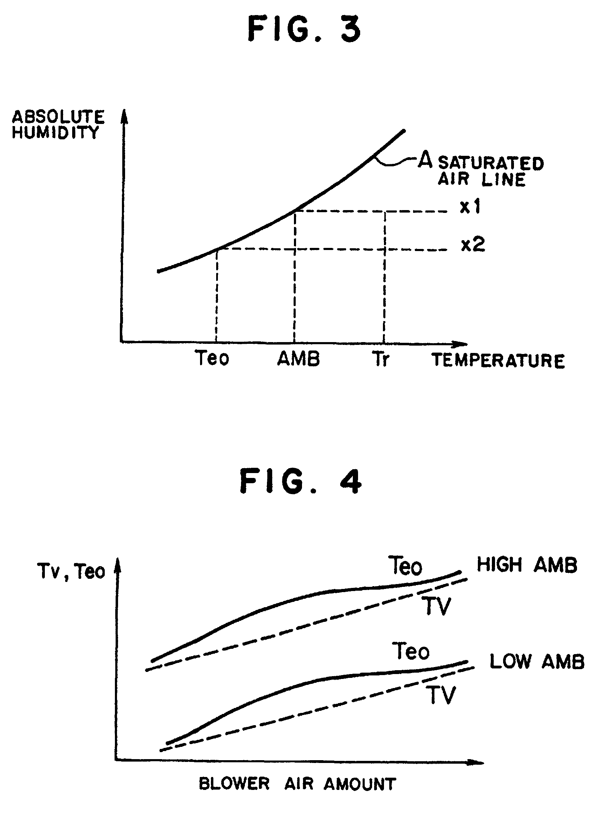

Namely, as shown in Fig. 3, when an outside air temperature AMB is given, an upper limit value (= x1) of an absolute humidity in a room causing no cloud of a window glass is determined from an intersection of the outside air temperature AMB and a saturated air line A. An upper limit absolute humidity (= x2) of temperature conditioned air blown into the room that can prevent a window glass from being clouded is given by the following equation.

$$x2 = x1 - \Delta W/G \qquad (1)$$

Namely, if an actual absolute humidity of temperature conditioned air blown into the room is below the upper limit absolute humidity x2, a window glass is not clouded. In the present invention, an upper limit temperature Teo of a cooler is considered to be an upper limit temperature of the temperature conditioned air that can prevent a window glass from being clouded. The upper limit temperature Teo of a cooler (in the below described embodiment, an upper limit temperature Teo of air at an exit of cooler 8) is determined from an intersection of the determined x2 and the saturated air line A.

As understood from the above-described eauation (1), the absolute humidity x2 is determined as a function of outside air temperature AMB through the upper limit absolute humidity x1 and as a function of an air amount blown out from a blower through G. The upper limit temperature Teo of cooler exit air temperature causing no cloud of a window glass is also determined as a function of outside air temperature AMB and blower air amount G, because the Teo is determined from the x2.

The upper limit temperature Teo of the cooler exit air temperature may be represented as a function of blower air amount from the saturated air line A and the above-described equation (1), as shown by solid lines in Fig. 4 (as cases of high AMB and low AMB). If a target cooler exit air temperature TV at an exit of cooler 8 is below the line of the upper limit temperature Teo, a window glass is not clouded. Further, as the target cooler exit air temperature TV approaches the line of the upper limit temperature Teo, power may be saved more greatly. In Fig. 4, in order to simply realize such requirements, a desired control line of a target cooler exit air temperature TV near an assumed limit line thereof is expressed by linear dashed lines. Each of these target cooler exit air temperatures TV to be actually controlled is determined by the following equation.

$$TV = a \cdot AMB + b \cdot BLV + c$$

Where, BLV is a voltage applied to motor 6 of blower 7, which represent a value corresponding to blower air amount, and a-c are constants. The constants a-c are designed as values so that the dashed lines of cooler exit air temperatures TV to be actually controlled may be present below the limit lines of Teo and as near as possible to the limit lines.

By the above-described control of the temperature of cooler 8, more precisely, by the control of the air temperature at an exit of cooler 8, the control of the air conditioning system is performed to satisfy the property shown in Fig. 4. As a result, the window glass is not clouded, and unnecessary dehumidification can be prevented and power saving can be achieved.

Here, as the temperature of the cooler, a temperature at a position between fins of the cooler, a temperature at a position between tubes of the cooler, a temperature of refrigerant at an entrance position of the cooler, a temperature of a pipe for a tank of the cooler, etc. may be used other than the above-described air temperature at an exit of the cooler.

Based on such a basic technical concept, an actual control according to a first embodiment of the present invention is performed as shown in Fig. 5.

Fig. 5 depicts an example of the control in a case where an automatic air conditioning is carried out in the system shown in Fig. 2. In Fig. 5, a target conditioned air temperature TOs is calculated by target conditioned air temperature calculating means 51 by the following equation, based on a signal 52 of a target room temperature Trs set by room temperature setting device 26, a signal 53 of a sunshine amount RAD detected by sunshine sensor 29, a signal 54 of a room temperature TR detected by room temperature sensor 27 (inside air temperature sensor) and a signal 55 of an outside air temperature AMB detected by outside air temperature sensor 28.

$$TOs = Kp1(TR - Trs) + f(AMB, RAD, Trs)$$

Where, Kp1 is a proportional constant.

Based on this TOs, the voltage BLV applied to motor 6 of blower 7 is calculated by blower voltage calculating means 56 by the following equation, as an amount corresponding to an amount of air adjusted by blower air amount adjusting means according to the

present invention.

$$BLV = f(TOs)$$

A target air temperature TV at an exit of cooler 8 (target temperature of a cooler according to the present invention) is calculated by cooler target temperature calculating means 57 by the following equation (the aforementioned equation (2)) based on the signal 55 of outside air temperature AMB and the signal of blower voltage BLV.

$$TV = a \cdot AMB + b \cdot BLV + c$$

Where, a-c are constants. As the temperature of the cooler, a temperature at a position between fins of the cooler, a temperature at a position between tubes of the cooler, a temperature of refrigerant at an entrance position of the cooler, a temperature of a pipe for a tank of the cooler, etc. may be used instead of the above-described air temperature at an exit of the cooler.

Based on the above calculated target air temperature TV at an exit of cooler 8, the suction pressure control signal PS sent to suction pressure controller 16 of compressor 12 is calculated by compressor control signal calculating means 59 by the following equation, such that an actual temperature of cooler 8 (in this embodiment, an actual air temperature Te at an exit of cooler 8 detected by cooler temperature detecting means 58) approaches the calculated target air temperature TV.

$$PS = P + I_n$$

$$P = kp2(TV - Te) \qquad \cdots \text{(proportional term)}$$

$$I_n = I_{n-1} - kp2 \cdot ki(TV - Te) \qquad \cdots \text{(integral term)}$$

Where, kp2 and ki are coefficients. Based on this calculation, suction pressure controller 16 is controlled, and an amount of refrigerant sucked into variable displacement compressor 12 (an amount of refrigerant discharged from the compressor 12) is controlled.

In air mixing damper opening degree calculating means 60, air mixing damper positional signal AMD is calculated by the following equation based on hot water temperature signal TW at an entrance position of heater 9 in addition to the above-described signals TOs and TV.

$$AMD = f(TOs, TW, TV)$$

Air mixing damper actuator 18 is controlled based on the result of this calculation.

As the result of the above-described control, the window glass is not clouded, and unnecessary dehumidification can be prevented and power saving can be achieved.

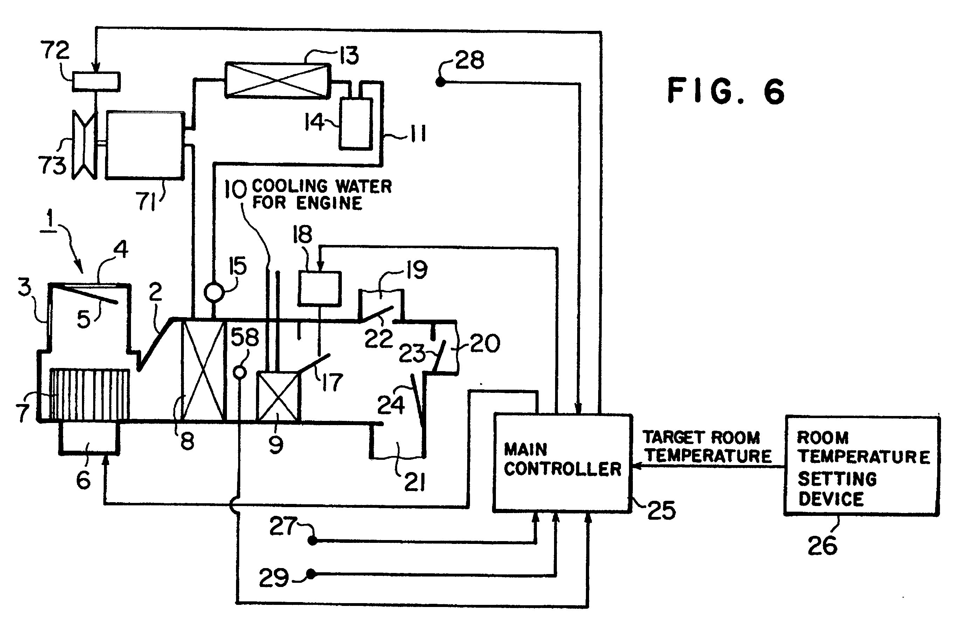

Fig. 6 depicts another air conditioning system for vehicles according to a second embodiment of the present invention. A point different from the aforementioned first embodiment is only in a constitution that a compressor 71 is driven via a clutch 73 and the control of the operation of compressor 71 is performed by control of connection/disconnection of clutch 73 by a clutch controller 72.

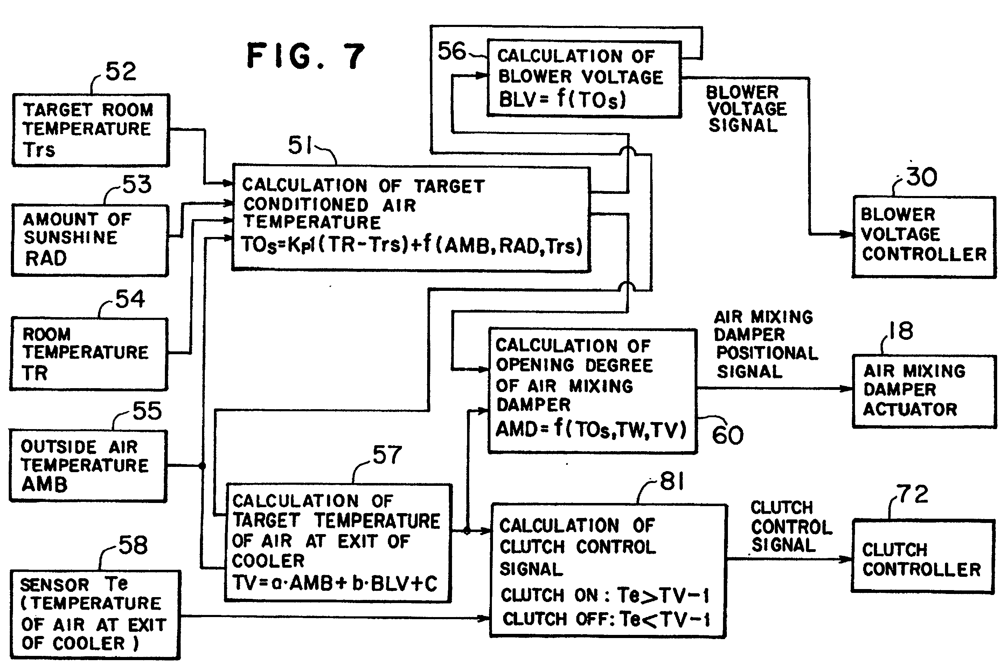

The control in main controller 25 is carried out, for example, as shown in Fig. 7. Here, only control different from that shown in Fig. 5 will be explained.

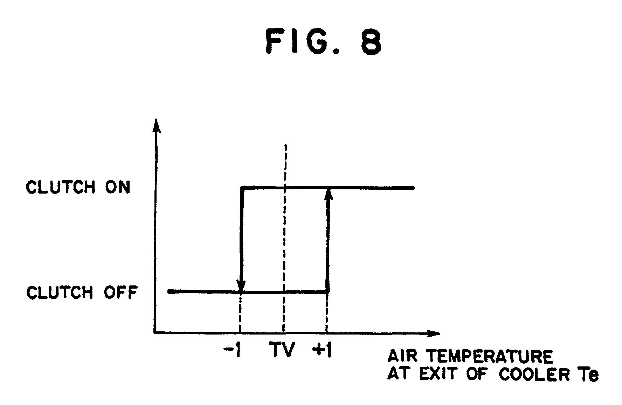

Based on a target air temperature TV at an exit of cooler 8 calculated by cooler target temperature calculating means 57, a condition of on/off (connection/disconnection) of clutch 73 is determined by clutch control signal calculating means 81. For example, when an actual air temperature Te at an exit of cooler 8 detected by cooler temperature detecting means 58 is lower than a target air temperature TV by 1 °C, the clutch operation condition is controlled in disconnection state, and when the air temperature Te is higher than the target air temperature TV by 1°C, the clutch operation condition is controlled in connection state and compressor 71 is driven. Namely, clutch 73 is turned on at a condition of Te>TV + 1, and clutch 73 is turned off at a condition of Te<TV - 1, via clutch controller 72. This operation may be controlled as shown in Fig. 8.

In such a control, the operation of compressor 71 is controlled by controlling the operation of clutch 73, thereby controlling the temperature of cooler 8 at a desired temperature. By this control at a desired optimum temperature, a window glass is not clouded, and power saving may be achieved by adequate control of dehumidification.

Although heater 9 is provided at a position downstream of cooler 8 in air duct 2 to heat air in the above-described embodiments, in order to eliminate an impossible control condition in such a system, it is preferred that a target conditioned air temperature required for controlling a temperature of an interior of a vehicle (a room temperature) and a target temperature of cooler 8 calculated by cooler target temperature calculating means 57 are compared with each other, and when the target conditioned air temperature is lower than the target temperature of cooler 8, the target temperature of cooler 8 is substituted by a correlation value of the required target conditioned air temperature.

## Claims

**1.** An air conditioning system for vehicles having at least a blower (7) sending air into an interior of a vehicle through an air path (2), a cooler (8) provided in said air path (2) for cooling/dehumidifying air by heat exchange with air, means for adjusting an amount of air sent by said blower (7) and means for detecting an outside air temperature (55), said air conditioning system comprising (a) means for calculating a target temperature of said cooler (57) based on an outside air temperature detected by said outside air temperature detecting means (55) and comprising (b) means for controlling a temperature of said cooler to approach said target temperature of said cooler by controlling a cooling condition of said cooler, **characterized in that** the calculation of said target temperature of said cooler (57) is also based on an amount of air adjusted by said blower air amount adjusting means (30).

2. The air conditioning system according to claim 1, wherein said cooler (8) cools air by heat exchange with refrigerant supplied by operation of a variable displacement compressor (12), and said cooler temperature controlling means controls said cooling condition of said cooler by controlling (47) an output of refrigerant of said variable displacement compressor.

3. The air conditioning system according to claim 1, wherein said cooler cools air by heat exchange with refrigerant supplied by operation of a compressor (12) driven via a clutch (37), and said cooler temperature controlling means controls said cooling condition of said cooler by controlling a driving condition of said compressor due to connection/disconnection of said clutch.

4. The air conditioning system according to any preceding claim, wherein a value of a control signal for controlling a voltage or/and an electric current applied to a motor (6) driving said blower (7) is used as a value of a signal sent to said blower air amount adjusting means (30).

5. The air conditioning system according to any preceding claim, wherein a heater (9) is provided in said air path (2) at a position downstream of said cooler, a target conditioned air temperature required for controlling a temperature of said interior of said vehicle and said target temperature of said cooler (8) calculated by said cooler target temperature calculating means (57) are compared with each other, and when said target conditioned air temperature is lower than said target temperature of said cooler (8), said target temperature of said cooler (8) is substituted by a correlation value of said target conditioned air temperature.

6. The air conditioning system according to any preceding claim, wherein said target temperature of said cooler (8) is calculated by said cooler target temperature calculating means (57), using the following equation.

$$TV = a \cdot AMB + b \cdot BLV + c$$

Where,

TV : target temperature of cooler
AMB: outside air temperature
BLV: amount of air adjusted by blower air amount adjusting means
a-c: coefficient

7. The air conditioning system according to any preceding claim, wherein said target temperature of said cooler (8) is calculated as an target air temperature at an exit of said cooler.

**Patentansprüche**

1. Fahrzeugklimaanlage mit wenigstens einem Gebläse (7), das Luft durch einen Luftpfad (2) in den Innenraum eines Fahrzeuges leitet, einen in dem Luftpfad (2) vorgesehenen Kühler (8) zum Kühlen/ Entfeuchten von Luft durch den Wärmeaustausch mit der Luft, eine Vorrichtung zur Einstellung einer Luftmenge, die durch das Gebläse (7) transportiert wird, und eine Vorrichtung zur Erfassung einer Außenlufttemperatur (55), wobei die Klimaanlage (a) eine Vorrichtung zur Berechnung einer Soll-Temperatur des Kühlers (57) aufweist, auf der Basis einer Außenlufttemperatur, die durch die Außenlufttemperaturerfassungsvorrichtung (55) erfaßt wird, und (b) eine Vorrichtung zur Steuerung einer Temperatur des Kühlers, um sich der Soll-Temperatur des Kühlers anzunähern, durch Steuerung eines Kühlzustandes des Kühlers aufweist, **dadurch gekennzeichnet, daß** die Berechnung der Soll-Temperatur des Kühlers (57) auch auf einer durch die Gebläseluftmengeneinstellvorrichtung (30) eingestellten Luftmenge basiert.

2. Klimaanlage gemäß Anspruch 1, wobei der Kühler 8 Luft durch Wärmeaustausch mit einem Kältemittel, das durch den Betrieb eines verstellbaren Kompressors (12) geliefert wird, abkühlt, und wobei die Kühlertemperatursteuerungsvorrichtung den Kühlzustand des Kühlers steuert, indem ein Auslaß des Kältemittels aus dem verstellbaren Kompressor gesteuert (47) wird.

3. Klimaanlage gemäß Anspruch 1, wobei der Kühler die Luft durch Wärmeaustausch mit einem Kältemittel kühlt, das durch den Betrieb eines Kompressors (12), der über eine Kupplung (37) angetrieben wird, geliefert wird und wobei die Kühlertemperatursteuerungsvorrichtung den Kühlzustand des Kühlers steuert, indem ein Antriebszustand des Kompressors aufgrund der Verbindung/Trennung der Kupplung gesteuert wird.

4. Klimaanlage gemäß irgendeinem der vorhergehenden Ansprüche, wobei ein Wert eines Steuersignals zur Steuerung einer Spannung oder/und eines elektrischen Stroms, die/der an einen Motor (6) angelegt wird, der das Gebläse (7) antreibt, als ein Wert eines Signals verwendet wird, das an die Gebläseluftmengeneinstellvorrichtung (30) geleitet wird.

5. Klimaanlage gemäß einem der vorhergehenden Ansprüche, wobei eine Heizung (9) in dem Luftpfad (2) an einer Position stromabwärts des Kühlers vorgesehen ist, wobei eine temperierte Soll-Lufttemperatur, die zur Steuerung einer Temperatur des Innenraums des Fahrzeugs erforderlich ist, und die Soll-Temperatur des Kühlers (8), die durch die Kühlersoll-Temperaturberechnungsvorrichtung (57) berechnet wird, miteinander verglichen werden, wobei die Soll-Temperatur des Kühlers (8) dann, wenn die temperierte Soll-Lufttemperatur niedriger als die Soll-Temperatur des Kühlers (8) ist, durch einen Korrelationswert der temperierten Soll-Lufttemperatur ersetzt wird.

6. Klimaanlage gemäß einem der vorhergehenden Ansprüche, wobei die Soll-Temperatur des Kühlers (8) durch die Kühlersoll-Temperaturberechnungsvorrichtung (57) berechnet wird, unter Verwendung der folgenden Gleichung:

$$TV = a \cdot AMB + b \cdot BLV + c,$$

wobei

TV:     Soll-Temperatur des Kühlers
AMB:    Außenlufttemperatur,
BLV:    Luftmenge, die durch die Gebläseluftmengeneinstellvorrichtung eingestellt wird,
a-c:    Koeffizient.

7. Klimaanlage gemäß einem der vorhergehenden Ansprüche, wobei die Soll-Temperatur des Kühlers (8) als eine Soll-Lufttemperatur an einem Ausgang des Kühlers berechnet wird.

**Revendications**

1. Installation de climatisation pour véhicules ayant au moins un ventilateur (7) envoyant de l'air à l'intérieur d'un véhicule par un passage de l'air (2), un refroidisseur (8) prévu dans le passage de l'air (2) pour refroidir/déshumidifier l'air par un échange de chaleur avec l'air, un moyen de réglage d'une quantité d'air envoyée par le ventilateur (7) et un moyen de détection d'une température de l'air extérieur (55), l'installation de climatisation comprenant (a) un moyen de calcul d'une température cible du refroidisseur (57) basé sur une température de l'air extérieur détectée par le moyen de détection de la température de l'air extérieur (55) et comprenant (b) un moyen de commande d'une température du refroidisseur pour approcher la température cible du refroidisseur en commandant une condition de refroidissement du refroidisseur,
   **caractérisée en ce que**
   le calcul de la température cible du refroidisseur (57) est également basé sur une quantité d'air réglée par le moyen de réglage de la quantité d'air du ventilateur (30).

2. Installation de climatisation selon la revendication 1,
   dans laquelle
   le refroidisseur (8) refroidit l'air par un échange de chaleur avec un réfrigérant fourni par le fonctionnement d'un compresseur à déplacement variable (12) et le moyen de commande de la température du refroidisseur (47) commande la condition de refroidissement du refroidisseur en commandant un débit de réfrigérant du compresseur à déplacement variable.

3. Installation de climatisation selon la revendication 1,
   dans laquelle
   le refroidisseur refroidit l'air par un échange de chaleur avec un réfrigérant fourni par le fonctionnement d'un compresseur (12) entraîné par un embrayage (37) et le moyen de commande de la température du refroidisseur commande la condition de refroidissement du refroidisseur en commandant une condition d'entraînement du compresseur par une solidarisation/désolidarisation de l'embrayage.

4. Installation de climatisation selon l'une quelconque des revendications précédentes,
   dans laquelle
   on utilise une valeur d'un signal de commande pour commander une tension et/ou un courant électrique appliqué à un moteur (6) entraînant le ventilateur (7) comme une valeur d'un signal envoyé au moyen de réglage de la quantité d'air du ventilateur (30).

5. Installation de climatisation selon l'une quelconque des revendications précédentes,
   dans laquelle
   un radiateur (9) est positionné dans le passage de l'air (2) en aval du refroidisseur, on compare ensemble une température cible de l'air conditionné requise pour commander une température de l'habitacle du véhicule avec la température cible du refroidisseur (8) calculée par le moyen de calcul de la température cible du refroidisseur (57), et lorsque la température cible de l'air conditionné est inférieure à la température cible du refroidisseur (8). la température cible du refroidisseur (8) est substituée par une valeur de corrélation de la température cible de l'air conditionné.

6. Installation de climatisation selon l'une quelconque des revendications précédentes.
dans laquelle
la température cible du refroidisseur (8) est calculée par le moyen de calcul de la température cible du refroidisseur (57), en utilisant l'équation suivante :

$$TV = a \cdot AMB + b \cdot BLV + c$$

où

TV : température cible du refroidisseur
AMB : température de l'air extérieur
BLV : quantité d'air réglée par le moyen de réglage de la quantité d'air du ventilateur
a à c : coefficient.

7. Installation de climatisation selon l'une quelconque des revendications précédentes,
dans laquelle
la température cible du refroidisseur (8) est calculée comme une température cible de l'air à une sortie du refroidisseur.

# FIG. 1

EP 0 908 340 B1

```
┌──────────────────────┐  42
│  OUTSIDE AIR         │        OUTSIDE AIR
│  TEMPERATURE         │        TEMPERATURE
│  DETECTING MEANS     │
└──────────────────────┘

┌──────────────────────┐  43        ┌──────────────────┐  44        41
│  BLOWER AIR          │            │  COOLER          │      TARGET
│  AMOUNT              │            │  TARGET          │      TEMPERATURE
│  ADJUSTING           │            │  TEMPERATURE     │
│  MEANS               │  AIR       │  CALCULATING     │
└──────────────────────┘  ADJUSTING│  MEANS           │
                          AMOUNT    └──────────────────┘

┌──────────────────────┐  46        ┌──────────────────┐  45   ┌──────────────────┐  47
│  SENSOR              │            │  COOLER          │       │  COOLER          │
│  (TEMPERATURE        │            │  CONTROL         │       │  TEMPERATURE     │
│  OF COOLER)          │            │  SIGNAL          │       │  CONTROL         │
│                      │            │  CALCULATING     │       │  MEANS           │
└──────────────────────┘            │  MEANS           │       └──────────────────┘
                                    └──────────────────┘
```

OUTSIDE AIR TEMPERATURE DETECTING MEANS — 42

BLOWER AIR AMOUNT ADJUSTING MEANS — 43

OUTSIDE AIR TEMPERATURE

AIR ADJUSTING AMOUNT

COOLER TARGET TEMPERATURE CALCULATING MEANS — 44

TARGET TEMPERATURE — 41

SENSOR (TEMPERATURE OF COOLER) — 46

COOLER CONTROL SIGNAL CALCULATING MEANS — 45

COOLER TEMPERATURE CONTROL MEANS — 47

FIG. 2

# FIG. 3

# FIG. 4

# FIG. 5

**52** — TARGET ROOM TEMPERATURE Trs

**53** — AMOUNT OF SUNSHINE RAD

**54** — ROOM TEMPERATURE TR

**55** — OUTSIDE AIR TEMPERATURE AMB

**58** — SENSOR Te ( TEMPERATURE OF AIR AT EXIT OF COOLER )

**51** — CALCULATION OF TARGET CONDITIONED AIR TEMPERATURE
$$TO_s = K_{pI}(TR - Trs) + f(AMB, RAD, Trs)$$

**56** — CALCULATION OF BLOWER VOLTAGE
$$BLV = f(TO_s)$$

**57** — CALCULATION OF TARGET TEMPERATURE OF AIR AT EXIT OF COOLER
$$TV = a \cdot AMB + b \cdot BLV + C$$

**60** — CALCULATION OF OPENING DEGREE OF AIR MIXING DAMPER
$$AMD = f(TO_s, TW, TV)$$

CALCULATION OF COMPRESSOR CONTROL SIGNAL
$$PS = P + I_n$$
$$P = kp2(TV - Te)$$
$$I_n = I_{n-1} - kp2(TV - Te)$$
**59**

BLOWER VOLTAGE SIGNAL

**30** — BLOWER VOLTAGE CONTROLLER

AIR MIXING DAMPER POSITIONAL SIGNAL

**18** — AIR MIXING DAMPER ACTUATOR

SUCTION PRESSURE CONTROL SIGNAL

**16** — SUCTION PRESSURE CONTROLLER

EP 0 908 340 B1

FIG. 6

COOLING WATER FOR ENGINE

MAIN CONTROLLER

TARGET ROOM TEMPERATURE

ROOM TEMPERATURE SETTING DEVICE

EP 0 908 340 B1

13

# FIG. 7

**52** TARGET ROOM TEMPERATURE Trs

**53** AMOUNT OF SUNSHINE RAD

**54** ROOM TEMPERATURE TR

**55** OUTSIDE AIR TEMPERATURE AMB

**58** SENSOR Te (TEMPERATURE OF AIR AT EXIT OF COOLER)

**51** CALCULATION OF TARGET CONDITIONED AIR TEMPERATURE
$$TOs = Kp1(TR - Trs) + f(AMB, RAD, Trs)$$

**57** CALCULATION OF TARGET TEMPERATURE OF AIR AT EXIT OF COOLER
$$TV = a \cdot AMB + b \cdot BLV + C$$

**56** CALCULATION OF BLOWER VOLTAGE
$$BLV = f(TOs)$$

**60** CALCULATION OF OPENING DEGREE OF AIR MIXING DAMPER
$$AMD = f(TOs, TW, TV)$$

**81** CALCULATION OF CLUTCH CONTROL SIGNAL
CLUTCH ON : Te > TV−1
CLUTCH OFF : Te < TV−1

BLOWER VOLTAGE SIGNAL

AIR MIXING DAMPER POSITIONAL SIGNAL

CLUTCH CONTROL SIGNAL

**30** BLOWER VOLTAGE CONTROLLER

**18** AIR MIXING DAMPER ACTUATOR

**72** CLUTCH CONTROLLER

EP 0 908 340 B1

# FIG. 8

# FIG. 9

EP 0 908 340 B1

**TARGET ROOM TEMPERATURE Trs**

**AMOUNT OF SUNSHINE RAD**

**ROOM TEMPERATURE TR**

**OUTSIDE AIR TEMPERATURE AMB**

CALCULATION OF TARGET CONDITIONED AIR TEMPERATURE
$TO_s = K_{p1}(TR - Trs) + f(AMB, RAD, Trs)$

CALCULATION OF BLOWER VOLTAGE
$BLV = f(TO_s)$

BLOWER VOLTAGE SIGNAL

**30**

**BLOWER VOLTAGE CONTROLLER**

AIR MIXING DAMPER POSITIONAL SIGNAL

CALCULATION OF OPENING DEGREE OF AIR MIXING DAMPER
$AMD = f(TO_s, TW, TV)$

**18**

**AIR MIXING DAMPER ACTUATOR**

CALCULATION OF TARGET TEMPERATURE OF AIR AT EXIT OF COOLER
$TV = TO_s$ or $TV = 3$

CALCULATION OF COMPRESSOR CONTROL SIGNAL
$PS = P + I_n$
$P = k_{p2}(TV - Te)$
$I_n = I_{n-1} - k_{p2}(TV - Te)$

SUCTION PRESSURE CONTROL SIGNAL

**16**

**SUCTION PRESSURE CONTROLLER**